# FASCICULE DE BREVET EUROPEEN

(11) **EP 3 500 068 B1**
(45) Date de publication et mention de la délivrance du brevet: **29.07.2020**
(21) Numéro de dépôt: 18211468.6
(22) Date de dépôt: 11.12.2018
(51) Int. Cl.: H05B 33/08, H05B 45/10, H05B 45/14, H05B 45/50

(54) **SYSTEME D ECLAIRAGE A PROTECTION THERMIQUE, TETE DE REVERBERE POUR ECLAIRAGE PUBLIC LE COMPRENANT, REVERBERE LE COMPRENANT ET PROCEDE DE REMPLACEMENT ASSOCIE**
BELEUCHTUNGSSYSTEM MIT WÄRMESCHUTZ, KOPF EINER STRASSENLAMPE FÜR DIE ÖFFENTLICHE BELEUCHTUNG, DER DIESES UMFASST, STRASSENLAMPE, DIE DIESES UMFASST, UND ENTSPRECHENDES AUSTAUSCHVERFAHREN
LIGHTING SYSTEM WITH THERMAL PROTECTION, STREET LIGHT HEAD FOR PUBLIC LIGHTING COMPRISING SAME, STREET LIGHT COMPRISING SAME AND ASSOCIATED REPLACEMENT METHOD

(30) Priorité: 13.12.2017 FR 1762079
(43) Date de publication de la demande: 19.06.2019
(73) Titulaire: Horizon Telecom, 71300 Montceau-les-Mines (FR)
(72) Inventeur: GLOD, Thierry, 71420 Ciry Le Noble (FR); GALLO, Giuseppe, 71710 Les Bizots (FR)
(74) Mandataire: Cabinet Chaillot

(56) Documents cités:
- DE-A1-102015 109 323
- US-A1- 2013 187 571
- US-A1- 2017 182 941

## Description

La présente invention concerne le domaine de l'éclairage, et porte en particulier sur un système d'éclairage à protection thermique, une tête de réverbère pour éclairage public le comprenant, un réverbère le comprenant et un procédé de remplacement associé dans une tête de réverbère existante.

Les systèmes d'éclairage pour l'espace public existants sont équipés avec des lampes à incandescence qui sont peu à peu remplacées par des lampes à base de diodes électroluminescentes (DEL). La durée de vie d'une lampe à incandescence est comprise entre 8000 et 12 000 heures et elle dégage une température de 300°C environ, tandis que la durée de vie théorique d'une lampe à base de DEL est de 50 000 heures à 25°C et elle dégage une température de 100°C environ.

Les têtes de réverbère pour éclairage public existantes qui reçoivent les lampes à incandescence sont étanches et conçues pour conserver la chaleur émise par les lampes à incandescence, les têtes de réverbère existantes ayant une durée de vie comprise entre 15 et 20 ans. Cependant, lorsqu'une lampe à base de DEL est enfermée dans un logement étanche, l'augmentation de la température dans ce logement conduit à une forte réduction de la durée de vie des DEL. Pour remédier à ce problème d'augmentation de température, les principaux fabricants d'ampoules à base de DEL ont intégré dans la lampe à base de DEL des dispositifs électroniques de protection thermique à base de composants actifs dont la plage de température de fonctionnement ne doit pas excéder 85°C. Etant donné que les composants actifs de ces dispositifs électroniques sont dans le même compartiment que les DEL dans la tête de réverbère, ces composants actifs réduisent le courant dans les DEL, ce qui entraîne une diminution de la puissance lumineuse. Cependant, ces dispositifs électroniques de protection thermique à base de composants actifs ne permettent d'avoir une température supérieure à 85°C dans le compartiment de la tête de réverbère dans lequel se trouve la lampe à base de DEL.

Généralement, les têtes de réverbère sont montées sur une structure porteuse comprenant un mât agencé pour sa fixation au sol, l'ampoule de la tête de réverbère étant pilotée par un dispositif de gestion de puissance positionné soit dans la tête de réverbère, soit dans le mât.

Le document US 2013/187571 A1 divulgue un système d'éclairage à protection thermique tel que défini dans le préambule de la revendication 1.

Les documents US 2017/182941 A1 et DE 10 2015 109323 A1 divulguent chacun un système d'éclairage à protection thermique connu dans l'état de la technique antérieur.

La présente invention vise à résoudre les inconvénients de l'état antérieur de la technique, en proposant un système d'éclairage à protection thermique tel que défini dans la revendication 1, comportant une ampoule à DEL comprenant une ou plusieurs DEL montées en série et une résistance à coefficient de température négatif, CTN, montée en parallèle de la ou des DEL, le courant fourni à l'ampoule à DEL étant régulé en fonction de la température de la ou des DEL mesurée à l'aide de la résistance CTN, ce qui permet de réduire le courant fourni aux DEL de l'ampoule à DEL lorsque la température des DEL devient trop importante, de manière à prolonger la durée de vie de l'ampoule à DEL, la résistance CTN pouvant fonctionner à des températures supérieures à 85°C contrairement aux composants actifs des dispositifs électroniques de protection thermique existants.

La présente invention a donc pour objet un système d'éclairage à protection thermique, caractérisé par le fait qu'il comprend une ampoule à diodes électroluminescentes, DEL, comprenant une ou plusieurs DEL montées en série entre une borne de tension supérieure de l'ampoule à DEL et une borne de tension inférieure de l'ampoule à DEL, l'ampoule à DEL comprenant en outre une résistance à coefficient de température négatif, CTN, montée en parallèle de la ou des DEL entre la borne de tension supérieure et la borne de tension inférieure de l'ampoule à DEL, le système d'éclairage à protection thermique comprenant en outre un dispositif de gestion de puissance relié aux bornes de tension supérieure et inférieure de l'ampoule à DEL et configuré pour être relié à une alimentation électrique, le dispositif de gestion de puissance comprenant un régulateur de courant et une unité centrale de traitement configurée pour commander le régulateur de courant de manière à réguler le courant fourni à l'ampoule à DEL en fonction de la température de la ou des DEL mesurée par l'unité centrale de traitement à l'aide de la résistance CTN.

Ainsi, l'ampoule à DEL, conçue en particulier pour l'éclairage public, est protégée par le dispositif de gestion de puissance qui régule automatiquement le courant fourni par l'alimentation électrique en cas de surchauffe du circuit imprimé de DEL de l'ampoule à DEL.

La valeur de la résistance CTN varie en fonction de la température, de telle sorte que l'unité centrale de traitement du dispositif de gestion de puissance utilise la résistance CTN de l'ampoule à DEL pour mesurer la température des DEL de l'ampoule à DEL.

L'ensemble dispositif de gestion de puissance et ampoule à DEL est indissociable puisque l'intelligence de commande du courant à fournir à l'ampoule à DEL est intégrée dans le dispositif de gestion de puissance.

Le dispositif de gestion de puissance fournit à l'ampoule à DEL un courant constant proportionnel à la puissance souhaitée par l'intermédiaire de son régulateur de courant piloté par l'unité centrale de traitement.

L'ampoule à DEL n'a pas besoin d'intégrer une électronique durcie qui supporte des températures élevées, étant donné que le dispositif de gestion de puissance est distinct de l'ampoule à DEL.

Selon une caractéristique particulière de l'invention, l'unité centrale de traitement est configurée pour commander le régulateur de courant de manière à réduire le courant fourni à l'ampoule à DEL lorsque la température mesurée de la ou des DEL en régime constant est supérieure à un seuil de température prédéterminé.

Ainsi, l'unité centrale de traitement calcule automatiquement la puissance à fournir à l'ampoule à DEL afin de ne jamais dépasser la température de fonctionnement des DEL en régime constant.

La maîtrise du non-dépassement des températures de fonctionnement et de vieillissement accéléré de l'ampoule à DEL permet ainsi une meilleure durée de vie de celle-ci ainsi qu'une sécurité accrue.

En cas de dépassement de la température dans un fonctionnement normal, l'ampoule à DEL ne stoppe pas brutalement son éclairage.

L' ampoule à DEL comprend en outre une diode montée en inverse disposée entre la borne de tension supérieure et la résistance CTN ou disposée entre la résistance CTN et la borne de tension inférieure.

L'unité centrale de traitement est configurée pour mesurer la température de la ou des DEL par application, sur la borne de tension inférieure de l'ampoule à DEL, d'une tension supérieure à celle appliquée sur la borne de tension supérieure de l'ampoule à DEL, ladite température étant déduite à l'aide d'un pont de résistances incluant la résistance CTN de l'ampoule à DEL.

Ainsi, en raison de la présence de la diode montée en inverse dans l'ampoule à DEL, la résistance CTN peut être lue par l'unité centrale de traitement en appliquant une tension inverse qui est non excessive afin de préserver les DEL.

Selon une caractéristique particulière de l'invention, l'unité centrale de traitement est configurée pour mesurer la température de la ou des DEL périodiquement à un intervalle de temps régulier, de préférence inférieur à 10 ms.

Ainsi, l'unité centrale de traitement vient mesurer à intervalle régulier la résistance image de la température des DEL de l'ampoule à DEL.

Le temps entre deux mesures de température ne doit pas dépasser de préférence 10 ms pour ne pas créer de scintillement.

Selon une caractéristique particulière de l'invention, le temps de mesure de la température, par l'unité centrale de traitement, est compris entre 5 µs et 100 µs, de préférence égal à 20 µs.

Le temps de mesure de température doit être le plus faible possible afin de faire fonctionner les DEL en mode courant et non en mode découplage, typiquement autour de 20 µs pour avoir un rapport ON/OFF supérieur à 99,8%.

L'unité centrale de traitement est configurée, avant chaque mesure de température, pour décharger la ligne entre les bornes de tension supérieure et inférieure de l'ampoule à DEL par application d'une tension identique sur les bornes de tension supérieure et inférieure de l'ampoule à DEL.

Ainsi, avant chaque lecture de la résistance CTN, l'unité centrale de traitement décharge la ligne, c'est-à-dire les capacités parasites, afin d'atteindre plus rapidement la tension image de la valeur de la résistance CTN à mesurer, ce qui permet de réduire le temps de mesure de température.

Selon une caractéristique particulière de l'invention, le dispositif de gestion de puissance comprend en outre un convertisseur alternatif-continu configuré pour convertir la tension à courant alternatif provenant de l'alimentation électrique en une tension à courant continu.

Selon une caractéristique particulière de l'invention, le dispositif de gestion de puissance comprend en outre au moins un régulateur de tension configuré pour réguler la tension à courant continu provenant du convertisseur alternatif-continu afin de créer les différentes tensions fournies à l'ampoule à DEL par l'intermédiaire de ses bornes de tension supérieure et inférieure.

Le dispositif de gestion de puissance applique une tension supérieure, provenant du régulateur de tension, sur la borne de tension supérieure de l'ampoule à DEL. Le dispositif de gestion de puissance comprend, de préférence, en outre trois commutateurs reliés à la borne de tension inférieure de l'ampoule à DEL, les trois commutateurs étant reliés respectivement à la masse, à la tension supérieure et à une tension de mesure de température fournie par le régulateur de tension et supérieure à la tension supérieure, les trois commutateurs étant pilotés par l'unité centrale de traitement en fonction du mode de fonctionnement du système d'éclairage à protection thermique, à savoir un mode de mesure de température dans lequel la tension de mesure de température est appliquée sur la borne de tension inférieure de l'ampoule à DEL, un mode de décharge de ligne dans lequel la tension supérieure est appliquée sur la borne de tension inférieure de l'ampoule à DEL, et un mode de mesure de courant dans lequel la masse est appliquée sur la borne de tension inférieure de l'ampoule à DEL et dans lequel les DEL de l'ampoule à DEL s'illuminent.

Selon une caractéristique particulière de l'invention, l'unité centrale de traitement est en outre configurée pour détecter un branchement en inverse de l'ampoule à DEL sur le dispositif de gestion de puissance.

Selon une caractéristique particulière de l'invention, l'unité centrale de traitement est en outre configurée pour détecter une absence d'ampoule à DEL branchée sur le dispositif de gestion de puissance.

Dans les deux cas d'une détection de branchement en inverse d'une ampoule à DEL et d'une détection d'absence d'ampoule à DEL, l'unité centrale de traitement ne cherche pas à atteindre la puissance nominale dans l'ampoule à DEL tant que le défaut est présent.

Selon une caractéristique particulière de l'invention, le dispositif de gestion de puissance comprend en outre au moins l'une parmi une liaison filaire et une liaison radio connectées à l'unité centrale de traitement.

Ainsi, les liaisons radio et/ou filaire permettent de piloter l'ampoule à DEL à distance, de remonter les informations disponibles depuis l'ampoule à DEL et le dispositif de gestion de puissance, et/ou d'utiliser des capteurs externes comme par exemple des capteurs de détection de présence de personnes.

La présente invention a également pour objet une tête de réverbère pour éclairage public comprenant un système d'éclairage à protection thermique tel que décrit ci-dessus, la tête de réverbère comprenant un premier compartiment dans lequel est disposé le dispositif de gestion de puissance et un second compartiment dans lequel est disposée l'ampoule à DEL.

Ainsi, l'ampoule à DEL de la tête de réverbère est séparée du dispositif de gestion de puissance de la tête de réverbère, les bornes de tension supérieure et inférieure de l'ampoule à DEL étant reliées au dispositif de gestion de puissance en utilisant deux fils d'alimentation. L'ampoule à DEL est reliée au dispositif de gestion de puissance de préférence à l'aide d'un câble à deux conducteurs et d'une douille E40 ou E27.

Le second compartiment de la tête de réverbère, pour l'ampoule à DEL, dispose, de préférence, d'un réflecteur de lumière permettant de diriger la lumière dans une direction donnée et d'une vasque permettant de fermer le second compartiment de manière à protéger l'ampoule à DEL.

Le dispositif de gestion de puissance du système d'éclairage à protection thermique selon l'invention est capable de collecter, sur les deux fils d'alimentation, la température des DEL, et la disposition de celui-ci dans un premier compartiment distinct du second permet d'avoir une température supérieure à 85°C dans le second compartiment recevant l'ampoule à DEL, alors que le premier compartiment ne subit pas directement l'augmentation de la température.

La présente invention a également pour objet un réverbère pour éclairage public comprenant une tête de réverbère et un mât sur lequel est montée la tête de réverbère, le réverbère comprenant en outre un système d'éclairage à protection thermique tel que décrit ci-dessus, l'ampoule à DEL étant disposée dans la tête de réverbère et le dispositif de gestion de puissance étant disposé dans le mât.

Ainsi, le dispositif de gestion de puissance est éloigné de l'ampoule à DEL et relié à celle-ci à l'aide de deux fils d'alimentation dont la section dépend de la longueur des fils d'alimentation. A titre d'exemple, pour une longueur inférieure à 2 mètres, la section des fils d'alimentation est de 0,25 mm², pour une longueur comprise entre 2 à 4 mètres, la section des fils d'alimentation est de 0,5 mm², pour une longueur comprise entre 4 et 8 mètres, la section des fils d'alimentation est de 1 mm², et pour une longueur comprise entre 8 et 12 mètres, la section des fils d'alimentation est de 1,5 mm².

La présente invention a en outre pour objet un procédé de remplacement d'un système d'éclairage à lampe à incandescence par un système d'éclairage à protection thermique tel que décrit ci-dessus dans un réverbère pour éclairage public existant comprenant une tête de réverbère et un mât sur lequel est montée la tête de réverbère, le système d'éclairage à lampe à incandescence comprenant un ballast disposé dans un premier compartiment de la tête de réverbère ou disposé dans le mât et une lampe à incandescence disposée dans un second compartiment de la tête de réverbère, le procédé comprenant les étapes consistant à remplacer le ballast par le dispositif de gestion de puissance du système d'éclairage à protection thermique et à remplacer la lampe à incandescence par l'ampoule à DEL du système d'éclairage à protection thermique.

Ainsi, grâce à la présente invention, les collectivités peuvent conserver les têtes de réverbère existantes puisqu'elles peuvent remplacer les lampes à incandescence par des ampoules à DEL bénéficiant de la gestion de la température par l'intermédiaire des fils d'alimentation reliés au dispositif de gestion de puissance.

Le système d'éclairage à protection thermique se sert des deux fils existants pour la détection de température, et n'a pas besoin de fils supplémentaires ou d'un capteur de température à proximité des DEL de l'ampoule à DEL.

Ainsi, sans adjonction de connectique supplémentaire, la maîtrise du non dépassement des températures de fonctionnement et de vieillissement accéléré de l'ampoule à DEL permet une meilleure durée de vie de celle-ci ainsi qu'une sécurité accrue. Il suffit d'échanger le ballast par le dispositif de gestion de température et de visser l'ampoule à DEL en lieu et place de l'ancienne ampoule à incandescence.

Pour mieux illustrer l'objet de la présente invention, on va en décrire ci-après, à titre illustratif et non limitatif, un mode de réalisation préféré, avec référence aux dessins annexés.

Sur ces dessins :
- la Figure 1 est une vue en coupe schématique d'une tête de réverbère pour éclairage public selon la présente invention ; et
- la Figure 2 est un schéma fonctionnel d'un système d'éclairage à protection thermique selon la présente invention.

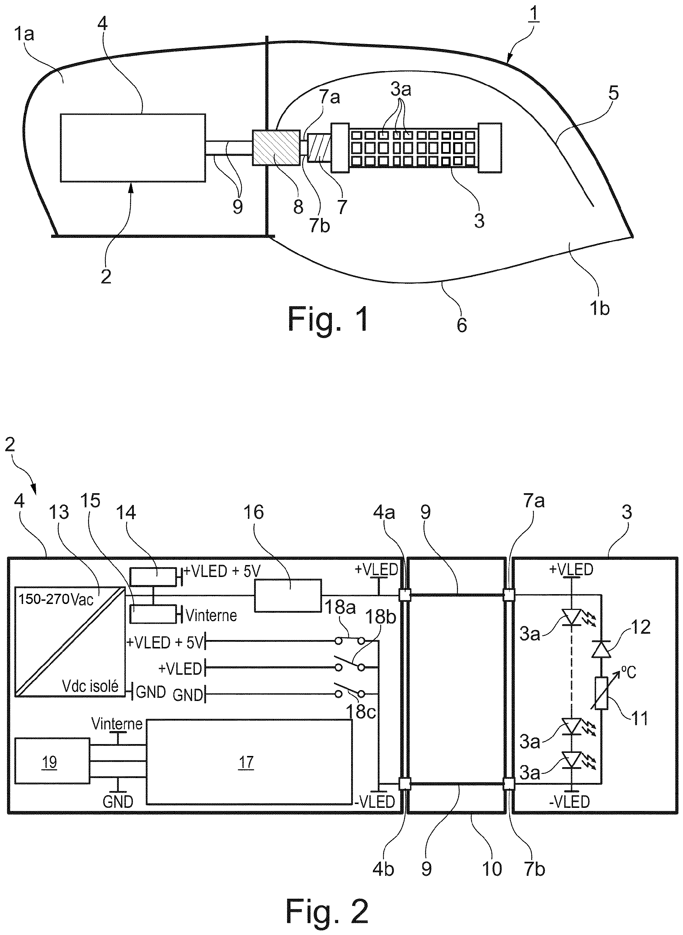

Si l'on se réfère à la Figure 1, on peut voir qu'il y est représenté une tête de réverbère pour éclairage public 1 selon la présente invention.

La tête de réverbère pour éclairage public 1 comprend un système d'éclairage à protection thermique 2 à l'intérieur de celle-ci.

Le système d'éclairage à protection thermique 2 comprend une ampoule à diodes électroluminescentes, DEL, 3 comprenant une pluralité de DEL 3a.

Il est à noter que l'ampoule 3 pourrait avoir une forme quelconque telle que cylindrique ou plate, sans s'écarter du cadre de la présente invention.

Le système d'éclairage à protection thermique 2 comprend en outre un dispositif de gestion de puissance 4 relié à une alimentation électrique (non représentée à la Figure 1) et configuré pour réguler le courant fourni à l'ampoule à DEL 3 en fonction de la température des DEL 3a. Le système d'éclairage à protection thermique 2 sera décrit plus en détail à la Figure 2.

La tête de réverbère 1 comprend un premier compartiment la dans lequel est disposé le dispositif de gestion de puissance 4 et un second compartiment 1b dans lequel est disposée l'ampoule à DEL 3.

Il est à noter que le dispositif de gestion de puissance 4 pourrait également être disposé dans un mât de réverbère portant la tête de réverbère 1, sans s'écarter du cadre de la présente invention.

Le second compartiment 1b de la tête de réverbère 1 dispose d'un réflecteur de lumière 5 disposé au-dessus de l'ampoule à DEL 3 et permettant de diriger la lumière vers le bas. Le second compartiment 1b de la tête de réverbère 1 comprend en outre une vasque 6 disposée sous l'ampoule à DEL 3 et permettant de fermer le second compartiment 1b de manière à protéger l'ampoule à DEL 3 vis-à-vis de l'extérieur.

L'ampoule à DEL 3 comprend une prise mâle 7 à deux bornes, à savoir une borne de tension supérieure 7a et une borne de tension inférieure 7b.

Une douille 8, telle qu'une douille E40 ou E27, est disposée entre les deux compartiments 1a et 1b de la tête de réverbère 1, ladite douille 8 étant conçue pour recevoir la prise mâle 7 de l'ampoule à DEL 3.

La douille 8 est reliée au dispositif de gestion de puissance 4 à l'aide d'un câble à deux fils d'alimentation 9, de manière à relier l'ampoule à DEL 3 au dispositif de gestion de puissance 4 afin de permettre l'alimentation de l'ampoule à DEL 3.

L'ampoule à DEL 3 est ainsi séparée du dispositif de gestion de puissance 4, de telle sorte que ceci permet d'avoir une température supérieure à 85°C dans le second compartiment 1b recevant l'ampoule à DEL 3, alors que le premier compartiment la ne subit pas directement l'augmentation de la température.

L'invention concerne également un procédé de remplacement d'un système d'éclairage à lampe à incandescence par un système d'éclairage à protection thermique 2 tel que décrit ci-dessus dans une tête de réverbère pour éclairage public 1 existante, le système d'éclairage à lampe à incandescence comprenant un ballast disposé dans un premier compartiment la de la tête de réverbère 1 existante et une lampe à incandescence disposée dans un second compartiment 1b de la tête de réverbère 1 existante, le procédé consistant à remplacer le ballast par le dispositif de gestion de puissance 4 du système d'éclairage à protection thermique 2 et à remplacer la lampe à incandescence par l'ampoule à DEL 3 du système d'éclairage à protection thermique 2. Ainsi, grâce à ce procédé, les collectivités peuvent conserver les têtes de réverbère 1 existantes puisqu'elles peuvent remplacer les lampes à incandescence par des ampoules à DEL 3 bénéficiant de la gestion de la température par l'intermédiaire des deux fils d'alimentation 9 reliés au dispositif de gestion de puissance 4.

Si l'on se réfère à la Figure 2, on peut voir qu'il y est représenté le système d'éclairage à protection thermique 2 selon la présente invention.

Le système d'éclairage à protection thermique 2 comprend l'ampoule à DEL 3, le dispositif de gestion de puissance 4 et une partie ligne 10 reliant l'ampoule à DEL 3 et le dispositif de gestion de puissance 4.

La partie ligne 10 comprend la douille 8 (non représentée à la Figure 2) et les deux fils d'alimentation 9 reliés respectivement aux bornes de tension supérieure 7a et inférieure 7b de l'ampoule à DEL 3.

L'ampoule à DEL 3 comprend la pluralité de DEL 3a montées en série entre la borne de tension supérieure 7a de l'ampoule à DEL 3 et la borne de tension inférieure 7b de l'ampoule à DEL 3.

L'ampoule à DEL 3 comprend en outre une résistance à coefficient de température négatif, CTN, 11 en série avec une diode montée en inverse 12 montées en parallèle des DEL 3a entre la borne de tension inférieure 7b et la borne de tension supérieure 7a de l'ampoule à DEL 3.

Le dispositif de gestion de puissance 4 est relié à une alimentation électrique et comporte deux bornes de sortie 4a et 4b respectivement reliées aux bornes de tension supérieure 7a et inférieure 7b de l'ampoule à DEL 3 par l'intermédiaire de la partie ligne 10. La borne de sortie 4a fournit une tension supérieure +VLED à la borne de tension supérieure 7a de l'ampoule à DEL 3, et la borne de sortie 4b fournit une tension inférieure -VLED à la borne de tension inférieure 7b de l'ampoule à DEL 3.

Le dispositif de gestion de puissance 4 comprend un convertisseur alternatif-continu 13 configuré pour convertir la tension à courant alternatif 150-270V provenant de l'alimentation électrique en la tension à courant continu +VLED. Le convertisseur alternatif-continu 13 comprend des protections contre les court-circuits, les surtensions et les surintensités, des filtrages EMI (brouillage électromagnétique) et un convertisseur à découpage avec un transformateur pour conversion directe.

Le dispositif de gestion de puissance 4 comprend en outre un régulateur de tension linéaire 14 configuré pour créer une tension +VLED + 5V à partir de la tension +VLED, et un convertisseur continu-continu abaisseur de tension 15 à découpage avec contre-réaction en tension configuré pour créer une tension Vinterne à partir de la tension +VLED.

Le dispositif de gestion de puissance 4 comprend en outre un régulateur de courant 16 et une unité centrale de traitement 17 configurée pour commander le régulateur de courant 16 de manière à réguler le courant fourni à l'ampoule à DEL 3 en fonction de la température des DEL 3a mesurée par l'unité centrale de traitement 17 à l'aide de la résistance CTN 11. Le dispositif de gestion de puissance 4 régule ainsi automatiquement le courant fourni par l'alimentation électrique en cas de surchauffe du circuit imprimé de DEL 3a de l'ampoule à DEL 3.

L'unité centrale de traitement 17 est un microcontrôleur comprenant de préférence au moins un émetteur-récepteur asynchrone universel (UART), un convertisseur numérique-analogique (ADC), un modulateur d'impulsions en largeur (PWM), de la mémoire interne et un processeur gérant l'ensemble des blocs fonctionnels.

Le régulateur de courant 16 est de préférence un convertisseur abaisseur de tension à découpage avec contre-réaction en courant.

La valeur de la résistance CTN 11 varie en fonction de la température, de telle sorte que l'unité centrale de traitement 17 du dispositif de gestion de puissance 4 utilise la résistance CTN 11 de l'ampoule à DEL 3 pour mesurer la température des DEL 3a de l'ampoule à DEL 3.

Le dispositif de gestion de puissance 4 fournit à l'ampoule à DEL 3 un courant constant proportionnel à la puissance souhaitée par l'intermédiaire de son régulateur de courant 16 piloté par l'unité centrale de traitement 17.

L'ampoule à DEL 3 n'a pas besoin d'intégrer une électronique durcie qui supporte des températures élevées, étant donné que le dispositif de gestion de puissance 4 est distinct de l'ampoule à DEL 3.

L'unité centrale de traitement 17 est configurée pour commander le régulateur de courant 16 de manière à réduire le courant fourni à l'ampoule à DEL 3 lorsque la température mesurée des DEL 3a en régime constant est supérieure à un seuil de température prédéterminé.

Le seuil de température prédéterminé peut par exemple être compris entre 85 et 105 °C selon la durée de vie souhaitée des DEL 3a.

L'unité centrale de traitement 17 calcule automatiquement la puissance à fournir à l'ampoule à DEL 3 afin de ne jamais dépasser la température de fonctionnement des DEL 3a en régime constant.

La maîtrise du non-dépassement des températures de fonctionnement et de vieillissement accéléré de l'ampoule à DEL 3 permet ainsi une meilleure durée de vie de celle-ci ainsi qu'une sécurité accrue.

Le dispositif de gestion de puissance 4 comprend en outre trois commutateurs 18a, 18b et 18c pilotés par l'unité centrale de traitement 17. L'une des bornes de chacun des trois commutateurs 18a, 18b et 18c est reliée à la borne de sortie 4b du dispositif de gestion de puissance 4.

L'autre des bornes du commutateur 18a est reliée à la tension +VLED + 5V, l'autre des bornes du commutateur 18b est reliée à la tension +VLED, et l'autre des bornes du commutateur 18c est reliée à la masse GND.

Les trois commutateurs 18a, 18b et 18c sont pilotés par l'unité centrale de traitement 17 en fonction du mode de fonctionnement sélectionné du système d'éclairage à protection thermique 2.

Lorsque l'unité centrale de traitement 17 ferme le commutateur 18a, tel que c'est le cas à la Figure 2, le système d'éclairage à protection thermique 2 entre dans un mode de mesure de température dans lequel la tension +VLED + 5V est appliquée sur la borne de tension inférieure 7b de l'ampoule à DEL 3. En raison de la présence de la diode montée en inverse 12 dans l'ampoule à DEL 3, la résistance CTN 11 peut être lue par l'unité centrale de traitement 17 en appliquant une tension inverse qui est non excessive afin de préserver les DEL 3a, ladite température étant déduite à l'aide d'un pont de résistances incluant la résistance CTN 11 de l'ampoule à DEL 3.

Lorsque l'unité centrale de traitement 17 ferme le commutateur 18c, le système d'éclairage à protection thermique 2 entre dans un mode de mesure de courant dans lequel la masse GND est appliquée sur la borne de tension inférieure 7b de l'ampoule à DEL 3 et dans lequel les DEL 3a de l'ampoule à DEL 3 s'illuminent, l'unité centrale de traitement 17 étant configurée dans ce mode pour mesurer le courant circulant dans la chaîne de DEL 3a par résistance shunt.

Lorsque l'unité centrale de traitement 17 ferme le commutateur 18b, le système d'éclairage à protection thermique 2 entre dans un mode de décharge de ligne dans lequel la tension +VLED est appliquée sur la borne de tension inférieure 7b de l'ampoule à DEL 3. L'unité centrale de traitement 17 est configurée, avant chaque mesure de température, pour décharger la ligne entre les bornes de tension supérieure 7a et inférieure 7b de l'ampoule à DEL 3 afin d'atteindre plus rapidement la tension image de la valeur de la résistance CTN 11 à mesurer dans le mode de mesure de température, ce qui permet de réduire le temps de mesure de température.

L'unité centrale de traitement 17 est configurée pour mesurer la température des DEL 3a périodiquement à un intervalle de temps régulier, de préférence inférieur à 10 ms pour ne pas créer de scintillement.

Le temps de mesure de la température, par l'unité centrale de traitement 17, est compris entre 5 µs et 100 µs, de préférence égal à 20 µs. Le temps de mesure de température doit être le plus faible possible afin de faire fonctionner les DEL 3a en mode courant et non en mode découplage.

L'unité centrale de traitement 17 est en outre configurée pour détecter un branchement en inverse de l'ampoule à DEL 3 sur la partie ligne 10 et pour détecter une absence d'ampoule à DEL 3 branchée sur la partie ligne 10. Dans les deux cas, l'unité centrale de traitement 17 ne cherche pas à atteindre la puissance nominale dans l'ampoule à DEL 3 tant que le défaut est présent.

Le dispositif de gestion de puissance 4 comprend en outre une liaison filaire et/ou une liaison radio connectées à l'unité centrale de traitement 17, les liaisons radio et/ou filaire permettant de piloter l'ampoule à DEL 3 à distance, de remonter les informations disponibles depuis l'ampoule à DEL 3 et le dispositif de gestion de puissance 4 et/ou d'utiliser des capteurs externes comme par exemple des capteurs de détection de présence de personnes.

L'unité centrale de traitement 17 et les liaisons radio et/ou filaire 19 sont alimentées par la tension Vinterne provenant du convertisseur continu-continu 15.

Il est à noter qu'une ou plusieurs broches de l'unité centrale de traitement 17 pourraient également être mises à disposition pour un dialogue avec une carte optionnelle.

## Revendications

1. Système d'éclairage à protection thermique (2), comprenant une ampoule à diodes électroluminescentes, DEL, (3) comprenant une ou plusieurs DEL (3a) montées en série entre une borne de tension supérieure (7a) de l'ampoule à DEL (3) et une borne de tension inférieure (7b) de l'ampoule à DEL (3), l'ampoule à DEL (3) comprenant en outre une résistance à coefficient de température négatif, CTN, (11) montée en parallèle de la ou des DEL (3a) entre la borne de tension supérieure (7a) et la borne de tension inférieure (7b) de l'ampoule à DEL (3), le système d'éclairage à protection thermique (2) comprenant en outre un dispositif de gestion de puissance (4) relié aux bornes de tension supérieure (7a) et inférieure (7b) de l'ampoule à DEL (3) et configuré pour être relié à une alimentation électrique, le dispositif de gestion de puissance (4) comprenant un régulateur de courant (16) et une unité centrale de traitement (17) configurée pour commander le régulateur de courant (16) de manière à réguler le courant fourni à l'ampoule à DEL (3) en fonction de la température de la ou des DEL (3a) mesurée par l'unité centrale de traitement (17) à l'aide de la résistance CTN (11), dans lequel l'ampoule à DEL (3) comprend en outre une diode montée en inverse (12) disposée entre la borne de tension supérieure (7a) et la résistance CTN (11) ou disposée entre la résistance CTN (11) et la borne de tension inférieure (7b), l'unité centrale de traitement (17) étant configurée pour mesurer la température de la ou des DEL (3a) par application, sur la borne de tension inférieure (7b) de l'ampoule à DEL (3), d'une tension supérieure à celle appliquée sur la borne de tension supérieure (7a) de l'ampoule à DEL (3), ladite température étant déduite à l'aide d'un pont de résistances incluant la résistance CTN (11) de l'ampoule à DEL (3), et le système d'éclairage à protection thermique **caractérisé en ce que** l'unité centrale de traitement (17) est configurée, avant chaque mesure de température, pour décharger la ligne entre les bornes de tension supérieure (7a) et inférieure (7b) de l'ampoule à DEL (3) par application d'une tension identique sur les bornes de tension supérieure (7a) et inférieure (7b) de l'ampoule à DEL (3) .

2. Système d'éclairage à protection thermique (2) selon la revendication 1, dans lequel l'unité centrale de traitement (17) est configurée pour commander le régulateur de courant (16) de manière à réduire le courant fourni à l'ampoule à DEL (3) lorsque la température mesurée de la ou des DEL (3a) en régime constant est supérieure à un seuil de température prédéterminé.

3. Système d'éclairage à protection thermique (2) selon l'une des revendications 1 et 2, dans lequel l'unité centrale de traitement (17) est configurée pour mesurer la température de la ou des DEL (3a) périodiquement à un intervalle de temps régulier, de préférence inférieur à 10 ms.

4. Système d'éclairage à protection thermique (2) selon l'une des revendications 1 à 3, dans lequel le temps de mesure de la température, par l'unité centrale de traitement (17), est compris entre 5 µs et 100 µs, de préférence égal à 20 µs.

5. Système d'éclairage à protection thermique (2) selon l'une des revendications 1 à 4, dans lequel le dispositif de gestion de puissance (4) comprend en outre un convertisseur alternatif-continu (13) configuré pour convertir la tension à courant alternatif provenant de l'alimentation électrique en une tension à courant continu.

6. Système d'éclairage à protection thermique (2) selon la revendication 5, dans lequel le dispositif de gestion de puissance (4) comprend en outre au moins un régulateur de tension (14) configuré pour réguler la tension à courant continu provenant du convertisseur alternatif-continu (13) afin de créer les différentes tensions fournies à l'ampoule à DEL (3) par l'intermédiaire de ses bornes de tension supérieure (7a) et inférieure (7b).

7. Système d'éclairage à protection thermique (2) selon l'une des revendications 1 à 6, dans lequel l'unité centrale de traitement (17) est en outre configurée pour détecter un branchement en inverse de l'ampoule à DEL (3) sur le dispositif de gestion de puissance (4).

8. Système d'éclairage à protection thermique (2) selon l'une des revendications 1 à 7, dans lequel l'unité centrale de traitement (17) est en outre configurée pour détecter une absence d'ampoule à DEL (3) branchée sur le dispositif de gestion de puissance (4).

9. Système d'éclairage à protection thermique (2) selon l'une des revendications 1 à 8, dans lequel le dispositif de gestion de puissance (4) comprend en outre au moins l'une parmi une liaison filaire et une liaison radio (19) connectées à l'unité centrale de traitement (17).

10. Tête de réverbère pour éclairage public (1), **caractérisé par le fait qu'**elle comprend un système d'éclairage à protection thermique (2) selon l'une des revendications 1 à 9, la tête de réverbère (1) comprenant un premier compartiment (1a) dans lequel est disposé le dispositif de gestion de puissance (4) et un second compartiment (1b) dans lequel est disposée l'ampoule à DEL (3) .

11. Réverbère pour éclairage public **caractérisé par le fait qu'**il comprend une tête de réverbère (1) et un mât sur lequel est montée la tête de réverbère (1), le réverbère comprenant en outre un système d'éclairage à protection thermique (2) selon l'une des revendications 1 à 9, l'ampoule à DEL (3) étant disposée dans la tête de réverbère (1) et le dispositif de gestion de puissance (4) étant disposé dans le mât.

12. Procédé de remplacement d'un système d'éclairage à lampe à incandescence par un système d'éclairage à protection thermique (2) selon l'une des revendications 1 à 9 dans un réverbère pour éclairage public existant comprenant une tête de réverbère (1) et un mât sur lequel est montée la tête de réverbère (1), le système d'éclairage à lampe à incandescence comprenant un ballast disposé dans un premier compartiment (1a) de la tête de réverbère (1) ou disposé dans le mât et une lampe à incandescence disposée dans un second compartiment (1b) de la tête de réverbère (1), le procédé étant **caractérisé par le fait qu'**il comprend les étapes consistant à remplacer le ballast par le dispositif de gestion de puissance (4) du système d'éclairage à protection thermique (2) et à remplacer la lampe à incandescence par l'ampoule à DEL (3) du système d'éclairage à protection thermique (2).

## Patentansprüche

1. Beleuchtungssystem mit Wärmeschutz (2), umfassend eine Lampe mit Leuchtdioden LED (3), umfassend eine oder mehrere LED (3a), die in Reihe zwischen einer Klemme höherer Spannung (7a) der LED-Lampe (3) und einer Klemme niederer Spannung (7b) der LED-Lampe (3) angebracht sind, wobei die LED-Lampe (3) ferner einen Widerstand mit negativem Temperaturkoeffizienten CTN (11) umfasst, der parallel zu der oder den LED (3a) zwischen der Klemme höherer Spannung (7a) und der Klemme niederer Spannung (7b) der LED-Lampe (3) angebracht ist, wobei das Beleuchtungssystem mit Wärmeschutz (2) ferner eine Leistungsmanagementvorrichtung (4) umfasst, die mit den Klemmen höherer (7a) und niederer (7b) Spannung der LED-Lampe (3) verbunden und ausgelegt ist, um mit einer elektrischen Versorgung verbunden zu sein, wobei die Leistungsmanagementvorrichtung (4) einen Stromregler (16) und eine zentrale Verarbeitungseinheit (17) umfasst, die ausgelegt ist, um den Stromregler (16) derart zu steuern, dass der der LED-Lampe (3) bereitgestellte Strom in Abhängigkeit von der Temperatur der LED(s) (3a), gemessen von der zentralen Verarbeitungseinheit (17) mit Hilfe des Widerstands CTN (11), geregelt wird,
wobei die LED-Lampe (3) ferner eine umgekehrt angebrachte Diode (12) umfasst, die zwischen der Klemme höherer Spannung (7a) und dem Widerstand CTN (11) angeordnet ist oder zwischen dem Widerstand CTN (11) und der Klemme niederer Spannung (7b) angeordnet ist, wobei die zentrale Verarbeitungseinheit (17) ausgelegt ist, um die Temperatur der LED(s) (3a) durch Anlegen einer Spannung an die Klemme niederer Spannung (7b) der LED-Lampe (3) zu messen, die höher ist als die, die an der Klemme höherer Spannung (7a) der LED-Lampe (3) anliegt, wobei die Temperatur mit Hilfe einer Widerstandsbrücke abgeleitet wird, die den Widerstand CTN (11) der LED-Lampe (3) einschließt, und
das Beleuchtungssystem mit Wärmeschutz (2) **dadurch gekennzeichnet ist, dass** die zentrale Verarbeitungseinheit (17) vor jeder Temperaturmessung ausgelegt ist, um die Leitung zwischen den Klemmen höherer (7a) und niederer (7b) Spannung der LED-Lampe (3) durch Anlegen einer identischen Spannung an den Klemmen höherer (7a) und niederer (7b) Spannung der LED-Lampe (3) zu entladen.

2. Beleuchtungssystem mit Wärmeschutz (2) nach Anspruch 1, wobei die zentrale Verarbeitungseinheit (17) ausgelegt ist, um den Stromregler (16) derart zu steuern, das der der LED-Lampe (3) bereitgestellte Strom reduziert wird, wenn die gemessene Temperatur der LED(s) (3a) in konstantem Betrieb höher als ein vorher festgelegter Temperaturgrenzwert ist.

3. Beleuchtungssystem mit Wärmeschutz (2) nach einem der Ansprüche 1 und 2, wobei die zentrale Verarbeitungseinheit (17) ausgelegt ist, um die Temperatur der LED(s) (3a) periodisch in einem regelmäßigen Zeitintervall vorzugsweise unter 10 ms zu messen.

4. Beleuchtungssystem mit Wärmeschutz (2) nach einem der Ansprüche 1 bis 3, wobei die Zeit der Temperaturmessung durch die zentrale Verarbeitungseinheit (17) zwischen 5 µs und 100 µs liegt, vorzugsweise gleich 20 µs beträgt.

5. Beleuchtungssystem mit Wärmeschutz (2) nach einem der Ansprüche 1 bis 4, wobei die Leistungsmanagementvorrichtung (4) ferner einen Wechselstrom-Gleichstrom-Wandler (13) umfasst, der ausgelegt ist, um die Wechselstromspannung, die von der elektrischen Versorgung kommt, in eine Gleichstromspannung umzuwandeln.

6. Beleuchtungssystem mit Wärmeschutz (2) nach Anspruch 5, wobei die Leistungsmanagementvorrichtung (4) ferner mindestens einen Spannungsregler (14) umfasst, der ausgelegt ist, um die Gleichstromspannung, die von dem Wechselstrom-Gleichstrom-Wandler (13) kommt, umzuwandeln, um die unterschiedlichen Spannungen zu erzeugen, die der LED-Lampe (3) über ihre Klemmen höherer (7a) und niederer (7b) Spannung bereitgestellt werden.

7. Beleuchtungssystem mit Wärmeschutz (2) nach einem der Ansprüche 1 bis 6, wobei die zentrale Verarbeitungseinheit (17) ferner ausgelegt ist, um einen umgekehrten Anschluss der LED-Lampe (3) auf der Leistungsmanagementvorrichtung (4) zu ermitteln.

8. Beleuchtungssystem mit Wärmeschutz (2) nach einem der Ansprüche 1 bis 7, wobei die zentrale Verarbeitungseinheit (17) ferner ausgelegt ist, um ein Fehlen einer auf der Leistungsmanagementvorrichtung (4) angeschlossenen LED-Lampe (3) zu ermitteln.

9. Beleuchtungssystem mit Wärmeschutz (2) nach einem der Ansprüche 1 bis 8, wobei die Leistungsmanagementvorrichtung (4) ferner mindestens eine von einer Drahtverbindung und einer Funkverbindung (19) umfasst, die an die zentrale Verarbeitungseinheit (17) angeschlossen sind.

10. Kopf einer Straßenlampe für die öffentliche Beleuchtung (1), **dadurch gekennzeichnet, dass** sie ein Beleuchtungssystem mit Wärmeschutz (2) nach einem der Ansprüche 1 bis 9 umfasst, wobei der Straßenlampenkopf (1) ein erstes Fach (1a) umfasst, in dem die Leistungsmanagementvorrichtung (4) angeordnet ist, und ein zweites Fach (1b), in dem die LED-Lampe (3) angeordnet ist.

11. Straßenlampe für die öffentliche Beleuchtung, **dadurch gekennzeichnet, dass** sie einen Straßenlampenkopf (1) und einen Mast umfasst, auf dem der Straßenlampenkopf (1) angebracht ist, wobei die Straßenlampe ferner ein Beleuchtungssystem mit Wärmeschutz (2) nach einem der Ansprüche 1 bis 9 umfasst, wobei die LED-Lampe (3) im Straßenlampenkopf (1) und die Leistungsmanagementvorrichtung (4) im Mast angeordnet ist.

12. Verfahren zum Austausch eines Beleuchtungssystems mit Glühlampe durch ein Beleuchtungssystem mit Wärmeschutz (2) nach einem der Ansprüche 1 bis 9 in einer vorhandenen Straßenlampe für die öffentliche Beleuchtung, die einen Straßenlampenkopf (1) und einen Mast umfasst, auf dem der Straßenlampenkopf (1) angebracht ist, wobei das Beleuchtungssystem mit Glühlampe ein Vorschaltgerät umfasst, das in einem ersten Fach (1a) des Straßenlampenkopfs (1) angeordnet oder im Mast angeordnet ist und eine Glühlampe, die in einem zweiten Fach (1b) des Straßenlampenkopfs (1) angeordnet ist, wobei das Verfahren **dadurch gekennzeichnet ist, dass** es die Schritte umfasst, die darin bestehen, das Vorschaltgerät durch die Leistungsmanagementvorrichtung (4) des Beleuchtungssystems mit Wärmeschutz (2) zu ersetzen und die Glühlampe durch die LED-Lampe (3) des Beleuchtungssystems mit Wärmeschutz (2) zu ersetzen.

## Claims

1. A lighting system with thermal protection (2), comprising a LED light bulb (3) comprising one or more LEDs (3a) connected in series between a high voltage terminal (7a) of the LED light bulb (3) and a low voltage terminal (7b) of the LED light bulb (3), the LED light bulb (3) further comprising a negative temperature coefficient (NTC) resistor (11) connected in parallel with the one or more LEDs (3a) between the high voltage terminal (7a) and the low voltage terminal (7b) of the LED light bulb (3), wherein the lighting system with thermal protection (2) further comprises a power management device (4) connected to the high (7a) and low (7b) voltage terminals of the LED light bulb (3) and configured to be connected to a power supply, the power management device (4) comprising a current regulator (16) and a central processing unit (17) configured to control the current regulator (16) so as to regulate the current supplied to the LED light bulb (3) according to the temperature of the one or more LEDs (3a) measured by the central processing unit (17) through the NTC resistor (11), wherein the LED light bulb (3) further comprises a reverse-biased diode (12) provided between the high voltage terminal (7a) and the NTC resistor (11) or provided between the NTC resistor (11) and the low voltage terminal (7b), the central processing unit (17) being configured to measure the temperature of the one or more LEDs (3a) by applying, on the low voltage terminal (7b) of the LED light bulb (3), a higher voltage than that applied on the high voltage terminal (7a) of the LED light bulb (3), said temperature being derived using a resistor bridge including the NTC resistor (11) of the LED light bulb (3), and the lighting system with thermal protection being **characterized in that** the central processing unit (17) is configured, prior to each temperature measurement, to discharge the line between the high (7a) and low (7b) voltage terminals of the LED light bulb (3) by applying an identical voltage on the high (7a) and low (7b) voltage terminals of the LED light bulb (3).

2. The lighting system with thermal protection (2) according to claim 1, wherein the central processing unit (17) is configured to control the current regulator (16) so as to reduce the current supplied to the LED light bulb (3) when the measured temperature of the one or more LEDs (3a) in steady state is higher than a predetermined temperature threshold.

3. The lighting system with thermal protection (2) according to claim 1 or 2, wherein the central processing unit (17) is configured to periodically measure the temperature of the one or more LEDs (3a) at a regular time interval, preferably smaller than 10ms.

4. The lighting system with thermal protection (2) according to any one of claims 1 to 3, wherein the temperature measurement time, through the central processing unit (17), is within the range from 5µs to 100µs, preferably equal to 20µs.

5. The lighting system with thermal protection (2) according to any one of claims 1 to 4, wherein the power management device (4) further comprises an AC/DC converter (13) configured to convert the alternating current voltage from the power supply into a direct current voltage.

6. The lighting system with thermal protection (2) according to claim 5, wherein the power management device (4) further comprises at least one voltage regulator (14) configured to regulate the direct current voltage from the AC/DC converter (13) in order to provide the various voltages supplied to the LED light bulb (3) through its high (7a) and low (7b) voltage terminals.

7. The lighting system with thermal protection (2) according to any one of claims 1 to 6, wherein the central processing unit (17) is further configured to detect a reverse connection of the LED light bulb (3) on the power management device (4).

8. The lighting system with thermal protection (2) according to any one of claims 1 to 7, wherein the central processing unit (17) is further configured to detect an absence of LED light bulb (3) connected on the power management device (4).

9. The lighting system with thermal protection (2) according to any one of claims 1 to 8, wherein the power management system (4) further comprises at least one of a wire link and a radio link (19) connected to the central processing unit (17).

10. A streetlamp head (1) for public lighting, **characterized in that** it comprises a lighting system with thermal protection (2) according to any one of claims 1 to 9, the streetlamp head (1) comprising a first compartment (1a) in which the power management device (4) is arranged and a second compartment (1b) in which the LED light bulb (3) is arranged.

11. A streetlamp for public lighting, **characterized in that** it comprises a streetlamp head (1) and a mast on which the streetlamp head (1) is mounted, the streetlamp further comprising a lighting system with thermal protection (2) according to any one of claims 1 to 9, the LED light bulb (3) being provided within the streetlamp head (1) and the power management device (4) being provided within the mast.

12. A method for replacing an incandescent lamp lighting system by a lighting system with thermal protection (2) according to any one of claims 1 to 9 within an existing streetlamp for public lighting comprising a streetlamp head (1) and a mast on which the streetlamp head (1) is mounted, the incandescent lamp lighting system comprising a ballast provided within a first compartment (1a) of the streetlamp head (1) or provided within the mast and an incandescent lamp provided within a second compartment (1b) of the streetlamp head (1), the method being **characterized in that** it comprises the steps of replacing the ballast by the power management device (4) of the lighting system with thermal protection (2) and of replacing the incandescent lamp by the LED light bulb (3) of the lighting system with thermal protection (2).
